# FASCICULE DE BREVET EUROPEEN

(11) **EP 3 299 262 B1**
(45) Date de publication et mention de la délivrance du brevet: **17.07.2019**
(21) Numéro de dépôt: 17187285.6
(22) Date de dépôt: 22.08.2017
(51) Int. Cl.: B62D 43/04, B60K 13/04, B60R 13/08

(54) **CAISSE DE VEHICULE AUTOMOBILE A PANIER DE RANGEMENT D'UNE ROUE DE SECOURS ET POURVU D'UN ECRAN DE PROTECTION THERMIQUE**
KRAFTFAHRZEUGKAROSSERIE MIT RESERVERAD-WANNE UND THERMISCHEM SCHUTZSCHILD
MOTOR VEHICLE BODY WITH BASKET FOR STORING A SPARE WHEEL, PROVIDED WITH A HEAT SHIELD

(30) Priorité: 27.09.2016 FR 1659113
(43) Date de publication de la demande: 28.03.2018
(73) Titulaire: PSA Automobiles SA, 78300 Poissy (FR)
(72) Inventeur: CONVERS, Germain, 25200 BETHONCOURT (FR)
(74) Mandataire: Fernandez, Francis Lionel

(56) Documents cités:
- EP-A1- 0 751 044
- FR-A1- 3 021 288
- FR-A3- 2 924 671

## Description

La présente invention relève du domaine de l'automobile et plus particulièrement de celui des paniers pour loger une roue de secours sous un véhicule automobile.

La caisse d'un véhicule automobile comprend notamment un plancher arrière sous lequel est monté basculant un panier de rangement d'une roue de secours de manière à permettre le retrait de la roue de secours et la mise en place d'une roue crevée du véhicule remplacée par la roue de secours.

Le panier de la roue de secours est arrimé habituellement au moyen d'un dispositif à crochet disposé sous le plancher du véhicule et destiné à saisir une extrémité libre du panier. L'autre extrémité du panier est reliée sous le plancher arrière du véhicule par une articulation permettant de faire pivoter le panier autour d'un axe d'articulation transversal au véhicule d'une position haute d'arrimage vers une position basse donnant accès à la roue de secours.

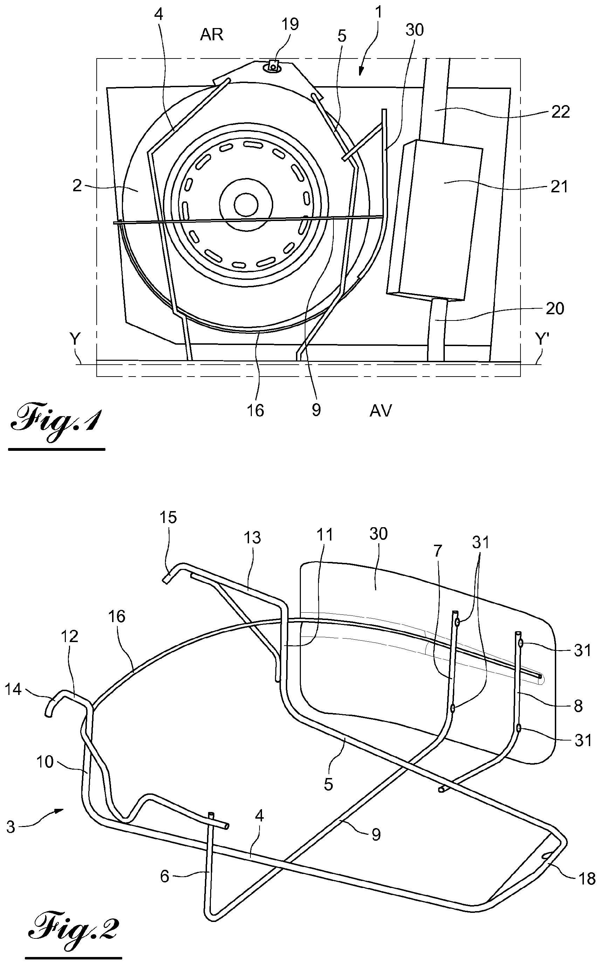

Les figures 1 à 3 représentent un panier conforme à l'art antérieur permettant de loger une roue de secours sous le plancher arrière de la caisse d'un véhicule automobile.
De plus, le document FR 2 924 671 A3 décrit une caisse d'un véhicule automobile selon le préambule de la revendication indépendante 1.

Sur ces figures, la référence 1 désigne le plancher arrière de la caisse du véhicule automobile et sous lequel est maintenue une roue de secours 2 au moyen d'un panier 3 de rangement de la roue de secours 2.

Le panier 3 est constitué de fils ou tiges métalliques, par exemple en acier, soudés les uns aux autres et pliés de façon à former une première série de brins 4, 5 s'étendant dans un premier plan et une seconde série de brins 6, 7, 8 sensiblement perpendiculaires au premier plan en s'étendant le long de génératrices d'un cylindre, deux, 7, 8 des brins de la seconde série, étant situés d'un même côté à l'opposé du brin 6 de cette même série avec les deux brins opposés 6, 7 reliés l'un à l'autre par un brin 9 solidaire par soudage des brins 4, 5 de la première série.

Les deux brins 4, 5 de la première série ont leurs extrémités situées d'un même côté reliées à une troisième série de brins 10, 11 sensiblement perpendiculaires au premier plan et de brins 12, 13 sensiblement perpendiculaires aux brins 10, 11. Les deux brins 12, 13 se terminent respectivement par deux extrémités en forme de crochet 14, 15 ancrées sous le plancher arrière 1 du véhicule pour permettre au panier 3 de pivoter selon un axe Y-Y' transversal au véhicule d'une position haute arrimée dans laquelle la roue de secours 2 est maintenue sous le plancher arrière 1 vers une position basse de retrait de cette roue de secours.

En outre, les brins 6, 7, 8, 10, 11 sont reliés ensemble par un fil métallique 16 courbé en arc de cercle et s'étendant dans un second plan sensiblement parallèle au premier plan de la première série de brins 4, 5.

Les deux brins 4, 5 de la première série sont reliés l'un à l'autre à l'opposé des extrémités en forme de crochet 14, 15 par une partie d'extrémité 18 approximativement en forme de U pouvant être accrochée à un crochet 19 disposé sous le plancher du véhicule de manière à verrouiller le panier 3 au plancher 1 à sa position de maintien de la roue de secours 2 sous ce plancher. A cette position, la roue de secours est supportée par les brins 4, 5 de la première série et est maintenue sur ces brins par les autres brins 6, 7, 8, 10, 11 et le fil métallique arqué 16.

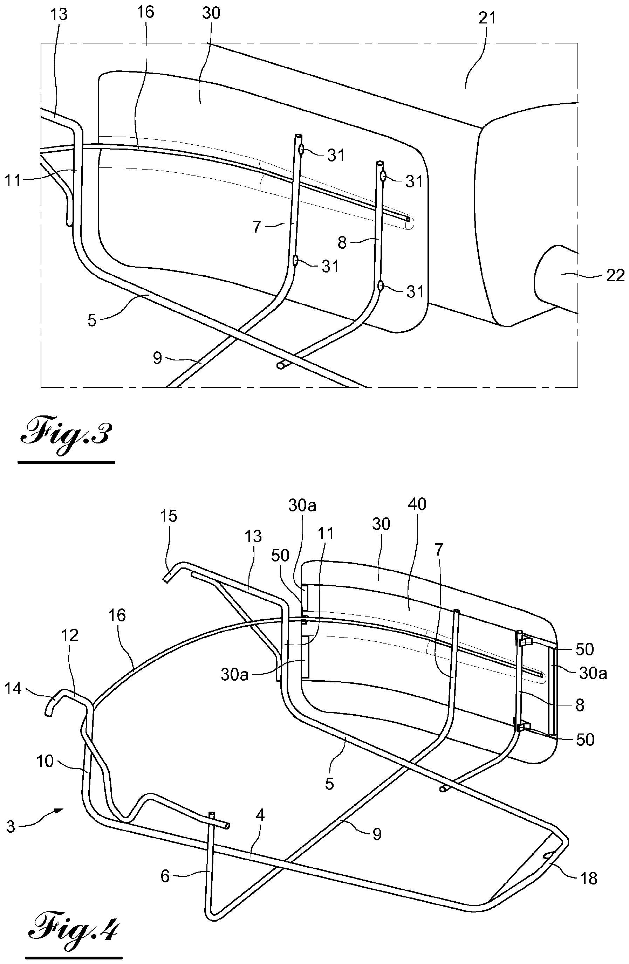

Les figures 1 et 3 représentent en partie une ligne d'échappement des gaz de combustion du moteur thermique du véhicule et comprenant, solidaires sous le plancher 1, une tubulure 20 partiellement représentée et raccordée au moteur thermique situé en avant AV du véhicule, un silencieux 21 et une tubulure 22 de sortie des gaz d'échappement en arrière AR du véhicule.

Du fait que le silencieux d'échappement 21 soit situé à proximité de la roue de secours 2, il est nécessaire de protéger cette dernière de la chaleur émise par le silencieux d'échappement 21, dont la température peut s'élever jusqu'à environ 400°C.

En effet, le pneumatique de la roue de secours 2 peut supporter sans problème une température d'environ 65°C mais ne doit pas supporter une température de pas plus de 100°C sinon la gomme du pneumatique de la roue de secours 2 se durcit. Au-delà de cette valeur de température de 100°C, les fournisseurs de pneumatiques se désengagent de toute responsabilité en cas de problème de pneumatique en rejetant cette responsabilité sur les constructeurs des véhicules automobiles.

Pour résoudre ce problème de température élevée pouvant atteindre le pneumatique, une solution consiste à prévoir un écran thermique 30 interposé entre les tubulures 20, 22 et le silencieux 21 de la ligne d'échappement et qui est fixé par soudage au panier 3.

Plus précisément, l'écran de protection thermique 30, qui présente la forme générale d'une plaque sensiblement rectangulaire réalisée en une tôle d'acier, le cas échéant revêtue d'une couche anticorrosion, est fixé à l'extérieur des deux brins 7, 8 de la seconde série par des points de soudure 31 en suivant le contour du fil métallique arqué 16 qui est lui-même fixé par soudage à l'extérieur des deux brins 7, 8, l'écran de protection thermique 30 s'étendant ainsi sensiblement perpendiculairement au plancher arrière 1.

Cependant, l'écran thermique de protection 30 ainsi solidaire du panier 3 n'est pas suffisamment efficace pour protéger la roue de secours 2 car il est en tôle d'acier.

En effet, le silencieux d'échappement 21 chauffe l'écran thermique de protection 30 par rayonnement et convection, augmentant alors la température entre le silencieux d'échappement 21 et l'écran de protection thermique 30.

En outre, l'écran de protection thermique 30 réchauffe l'air entre cet écran et la roue de secours 2 dont la température est encore suffisamment élevée pour durcir le pneumatique de cette roue.

Par ailleurs, il s'avère que les constructeurs de véhicules automobiles installent un panier de rangement d'une roue de secours avec un écran de protection thermique de cette roue non seulement sous des véhicules à moteurs à essence mais également sous des véhicules à moteurs diesels. Or, les lignes d'échappement des moteurs diesels ne comportent pas de silencieux mais uniquement une sourdine qui est très éloignée de la roue de secours. Dès lors, les véhicules à moteurs diesels n'ont pas besoin d'être équipés d'écrans de protection thermique des roues de secours.

La présente invention a pour but de pallier l'inconvénient ci-dessus de l'art antérieur en proposant une solution d'une part évitant d'équiper les véhicules à moteurs diesels d'un écran de protection thermique de la roue de secours et d'autre part, pour les véhicules à moteurs à essence, permettant d'installer, un agencement d'écran de protection thermique de la roue de secours qui protège efficacement cette roue de la chaleur du silencieux de la ligne d'échappement.

A cet effet, l'invention concerne une caisse d'un véhicule, tel qu'un véhicule automobile, comprenant un plancher arrière, un panier de rangement d'une roue de secours disposé sous le plancher arrière, une ligne d'échappement comprenant notamment un silencieux fixé sous le plancher arrière, et un écran de protection thermique interposé entre le silencieux d'échappement et la roue de secours et qui est caractérisée en ce que l'écran de protection thermique est amoviblement fixé par des moyens de fixation au panier de rangement de la roue de secours.

De préférence, l'écran de protection thermique est solidaire d'une pièce de support amoviblement fixée par les moyens de fixation au panier de rangement de la roue de secours et à l'extérieur de ce panier avec l'écran de protection thermique disposé en face du silencieux.

Avantageusement, la pièce de support est réalisée en une matière plastique rigide.

De préférence, les moyens de fixation amovible comprennent des clips venant de matière avec la pièce de support.

Le panier de rangement de la roue de secours est constitué de fils métalliques soudés les uns aux autres et pliés de façon à former une première série de brins s'étendant dans un premier plan et sur lesquels peut reposer la roue de secours, une seconde série de brins sensiblement perpendiculaires au premier plan en s'étendant le long de génératrices d'un cylindre, et un fil métallique courbé en arc de cercle s'étendant dans un second plan parallèle au premier plan en étant solidaire d'au moins deux brins de la seconde série de brins et les clips de la pièce de support enserrent élastiquement au moins l'un des brins de la seconde série de brins et le fil métallique courbé en arc de cercle.

La pièce de support comprend à sa face externe une empreinte longiligne creuse dans laquelle est engagé le fil métallique courbé en arc de cercle et dont la partie convexe faisant saillie de la face interne de la pièce de support est encastrée dans une empreinte creuse longiligne conjuguée de la face interne de l'écran de protection thermique.

De préférence, l'écran de protection thermique est réalisé en aluminium et est fixé par sertissage sur la pièce de support à l'aide de pattes solidaires de l'écran de protection thermique.

L'écran de protection thermique s'étend sous le plancher arrière sensiblement perpendiculairement à ce dernier.

L'écran de protection thermique et la pièce de support présentent chacun la forme générale d'une plaque rectangulaire.

L'invention vise également un véhicule automobile, qui est caractérisé en ce qu'il comprend une caisse telle que définie précédemment.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- La figure 1 est une vue de dessous du plancher arrière d'un véhicule automobile pourvu d'un écran de protection thermique de l'art antérieur décrit précédemment ;
- la figure 2 est une vue en perspective du panier de rangement de la roue de secours de la figure 1 et comportant l'écran thermique de protection ;
- la figure 3 est une vue partielle en perspective représentant l'écran de protection thermique de la figure 1 situé en regard du silencieux de la ligne d'échappement du véhicule automobile;
- la figure 4 est une vue en perspective du panier de rangement de la roue de secours de la figure 2 et comportant un agencement d'écran de protection thermique conforme à l'invention ;

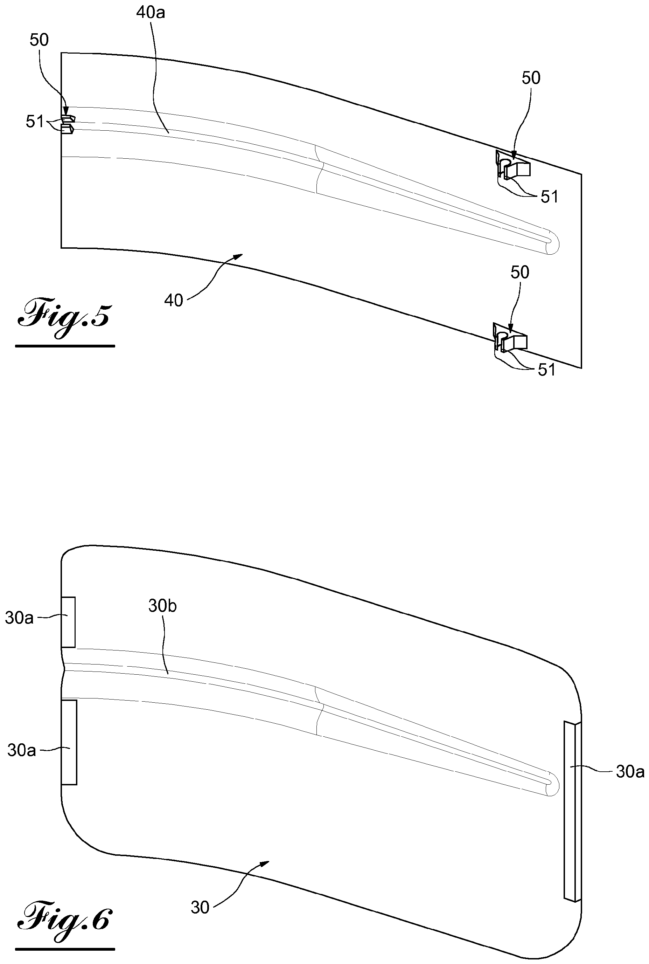

- la figure 5 est une vue en perspective de l'écran thermique de protection de l'invention, et
- la figure 6 est une vue en perspective d'une pièce de support permettant de fixer amoviblement l'écran de la figure 5 au panier de rangement de la roue de secours.

La figure 4 montre que le panier 3 de rangement de la roue de secours sous le plancher arrière d'un véhicule, notamment automobile, est d'une structure identique à celle du panier 3 de rangement de la roue de secours 2 décrit en référence aux figures 1 à 3.

Dans ces conditions, le panier 3 de rangement de la roue de secours de la figure 4 ne sera pas à nouveau décrit dans sa structure.

Selon l'invention, l'écran de protection thermique 30 est amoviblement fixé au panier 3 de rangement de la roue de secours en étant interposé entre le silencieux d'échappement 21 et la roue de secours 2 visibles seulement aux figures 1 et 3 de l'art antérieur.

Plus précisément, l'écran de protection thermique 30 est solidaire d'une pièce de support 40 amoviblement fixée par des moyens ou organes de fixation 50 au panier 3 de rangement de la roue de secours de manière que l'écran de protection thermique 30 soit disposé en face du silencieux du véhicule et la pièce de support 40 soit en regard de la roue de secours.

De préférence, la pièce de support 40 est réalisée en une matière plastique rigide et les organes permettant d'amoviblement fixer cette pièce de support au panier 3 de rangement de la roue de secours comprennent des clips 50 venant de matière avec la pièce de support 40.

La pièce de support 40 et l'écran de protection thermique 30 présentent tous les deux la forme générale d'une plaque rectangulaire avec la pièce de support 40 d'une largeur plus faible que celle de l'écran de protection thermique 30 et d'une longueur sensiblement égale à celle de cet écran.

L'écran de protection thermique 30 est avantageusement réalisé en aluminium et comporte solidaire de chacune de ses extrémités, des pattes 30a permettant de fixer jointivement par sertissage l'écran 30 sur la pièce de support 40. Par exemple, l'écran 30 comporte à l'une de ses extrémités une patte continue 30a suivant sa largeur et rabattue sur le bord d'extrémité externe correspondant de la pièce de support 40 et deux pattes 30a espacées l'une de l'autre à son extrémité opposée en direction de la largeur de l'écran 30 et rabattues sur le bord externe d'extrémité opposé de la pièce de support 40.

La pièce de support 40 comporte à sa face externe ou dorsale une empreinte longiligne creuse 40a s'étendant sensiblement sur toute la longueur de cette pièce et dans laquelle peut être engagé le fil métallique courbé en arc de cercle 16 du panier 3 de rangement de la roue de secours. La partie convexe de l'empreinte 40a faisant saillie de la face interne de la pièce de support 40 s'encastre dans une empreinte longiligne creuse 30b de la face interne de l'écran de protection thermique 30 et qui s'étend sensiblement tout le long de cette dernière. L'empreinte 30b de l'écran de protection thermique 30 est de forme conjuguée à l'empreinte convexe faisant saillie de la face interne de la pièce de support 40 de manière que l'empreinte convexe de la pièce de support 40 puisse s'emboiter dans l'empreinte creuse 30b de l'écran de protection thermique 30 avant que cet écran soit fixé par sertissage sur la pièce de support 40 à l'aide des pattes 30a de l'écran de protection thermique 30.

Comme le montre la figure 4, la pièce de support 40 comprend deux clips 50 situés sur une direction transversale à la longueur de la pièce de support 40 au voisinage de l'un des bords d'extrémité de cette pièce.

Chacun de ces deux clips 50 comprend deux branches élastiquement déformables 51 faisant saillie de la face externe de la pièce de support 40 et formant une pince susceptible d'enserrer élastiquement le brin 8 du panier 3 de rangement de la roue de secours.

La pièce de support 40 comprend un troisième clip 50 situé au voisinage du bord d'extrémité de la pièce de support 40 à l'opposé de celui près duquel se trouvent les deux autres clips 50. Le troisième clip 50, identique aux deux précédents, comprend deux branches élastiquement déformables faisant saillie de la face externe de la pièce de support 40 et susceptibles d'enserrer élastiquement le fil métallique courbé en arc de cercle 16 du panier 3 de rangement de la roue de secours.

Bien entendu, la pièce de support 40 peut comporter d'autres clips 50, par exemple deux autres clips 50 situés sur une direction transversale à la longueur de cette pièce et susceptible d'enserrer élastiquement l'autre brin 7 du panier 3 de rangement de la roue de secours.

Ainsi, la pièce de support 40 est amoviblement fixée au(x) brin(s) 7, 8 et au fil métallique 16 à l'extérieur de ceux-ci, c'est-à-dire à l'extérieur du panier 3 de rangement de la roue de secours.

Lorsque l'ensemble unitaire constitué par l'écran de protection thermique 30 et la pièce de support 40 est fixé par les clips 50 au panier 3 de rangement de la roue de secours, cet ensemble présente une partie incurvée suivant le contour courbé du fil métallique 16 de ce panier avec la pièce de support 40 tournée vers le pneumatique de la roue de secours du véhicule.

Ainsi, l'écran de protection thermique ci-dessus décrit de l'invention peut être ajouté au panier de rangement de la roue de secours ou retiré de celui-ci d'une manière extrêmement simple et rapide grâce aux clips de fixation 50.

L'écran de protection thermique 30 pourra être fixé en ligne de montage sur le panier de rangement de la roue de secours d'un véhicule à moteur à essence. Par contre, pour les véhicules à moteurs diesels, l'écran de protection thermique ne sera pas monté sur le panier de rangement de la roue de secours.

Il est par ailleurs à noter que l'écran de protection thermique étant fixé au panier de rangement de la roue de secours pour les véhicules à moteurs à essence par l'intermédiaire de la pièce de support en matériau plastique, cet écran peut être réalisé en aluminium, gaufré ou non, matériau qui présente de meilleures caractéristiques de protection thermique d'une roue de secours vis-à-vis du silencieux comparativement à un écran de protection thermique en tôle d'acier. En outre, la fixation de l'écran de protection thermique au panier de la roue de secours par l'intermédiaire de la pièce de support en matière plastique est non seulement extrêmement simple mais est également peu coûteuse.

D'autres variantes de réalisations peuvent être apportées sans sortir du cadre de l'invention. Ainsi, bien que cela ne soit pas le mode de réalisation préféré, il est possible d'envisager la fixation de la pièce de support de l'écran de protection thermique au panier de rangement de la roue de secours par l'intermédiaire d'un assemblage à vis de fixation enserrant les brins métalliques et/ou le fil métallique courbé du panier. Enfin, l'écran de protection thermique pourrait être amoviblement fixé directement au panier de rangement de la roue de secours par tout moyen approprié.

## Revendications

1. Caisse d'un véhicule, tel qu'un véhicule automobile, comprenant un plancher arrière (1), un panier (3) de rangement d'une roue de secours (2) disposé sous le plancher arrière (1), une ligne d'échappement comprenant notamment un silencieux (21) fixé sous le plancher arrière (1), et un écran de protection thermique (30) interposé entre le silencieux d'échappement (21) et la roue de secours (2), **caractérisée en ce que** l'écran de protection thermique (30) est amoviblement fixé par des moyens de fixation (50) au panier (3) de rangement de la roue de secours (2).

2. Caisse selon la revendication 1, **caractérisée en ce que** l'écran de protection thermique (30) est solidaire d'une pièce de support (40) amoviblement fixée par les moyens de fixation (50) au panier (3) de rangement de la roue de secours (2) et à l'extérieur de ce panier avec l'écran de protection thermique (30) disposé en face du silencieux (21).

3. Caisse selon la revendication 2, **caractérisée en ce que** la pièce de support (40) est réalisée en une matière plastique rigide.

4. Caisse selon la revendication 3, **caractérisée en ce que** les moyens de fixation amovible comprennent des clips (50) venant de matière avec la pièce de support.

5. Caisse selon la revendication 4, **caractérisée en ce que** le panier (3) de rangement de la roue de secours (2) est constitué de fils métalliques soudés les uns aux autres et pliés de façon à former une première série de brins (4,5) s'étendant dans un premier plan et sur lesquels peut reposer la roue de secours (2), une seconde série de brins (7,8) sensiblement perpendiculaires au premier plan en s'étendant le long de génératrices d'un cylindre, et un fil métallique courbé en arc de cercle (16) s'étendant dans un second plan parallèle au premier plan en étant solidaire d'au moins deux brins (7,8) de la seconde série de brins et **en ce que** les clips (50) de la pièce de support (40) enserrent élastiquement au moins l'un (7) des brins (7,8) de la seconde série de brins et le fil métallique courbé en arc de cercle (16).

6. Caisse selon la revendication 5, **caractérisée en ce que** la pièce de support (40) comprend à sa face externe une empreinte longiligne creuse (40a) dans laquelle est engagé le fil métallique courbé en arc de cercle (16) et dont la partie convexe faisant saillie de la face interne de la pièce de support (40) est encastrée dans une empreinte creuse longiligne conjuguée (30b) de la face interne de l'écran de protection thermique (30).

7. Caisse selon l'une des revendications 2 à 6, **caractérisée en ce que** l'écran de protection thermique (30) est réalisé en aluminium et est fixé par sertissage sur la pièce de support (40) à l'aide de pattes (30a) solidaires de l'écran de protection thermique (30).

8. Caisse selon l'une des revendications 1 à 7, **caractérisée en ce que** l'écran de protection thermique (30) s'étend sous le plancher arrière (1) sensiblement perpendiculairement à ce dernier.

9. Caisse selon l'une des revendications 2 à 8, **caractérisée en ce que** l'écran de protection thermique (30) et la pièce de support (40) présentent chacun la forme générale d'une plaque rectangulaire.

10. Véhicule automobile, **caractérisé en ce qu'**il comprend une caisse selon l'une quelconque des revendications 1 à 9.

## Patentansprüche

1. Karosserie eines Fahrzeugs wie z. B. eines Kraftfahrzeugs, umfassend einen hinteren Boden (1), eine Wanne (3) eines Reserverads (2), die unter dem hinteren Boden (1) angeordnet ist, eine Abgasleitung, die insbesondere einen Schalldämpfer (21) umfasst, die unter dem hinteren Boden (1) fixiert ist, und einen thermischen Schutzschild (30), der zwischen den Abgasschalldämpfer (21) und das Reserverad (2) gestellt ist, **dadurch gekennzeichnet, dass** der thermische Schutzschild (30) entfernbar mit Hilfe von Fixierungsmitteln (50) an die Wanne (3) des Reserverads (2) fixiert ist.

2. Wanne nach Anspruch 1, **dadurch gekennzeichnet, dass** der thermische Schutzschild (30) fest mit einem Tragestück (40) verbunden ist, das entfernbar mit Hilfe der Fixierungsmittel (50) an die Wanne (3) des Reserverads (2) und an die Außenseite dieser Wanne mit dem thermischen Schutzschild (30) fixiert ist, das gegenüber dem Schalldämpfer (21) angeordnet ist.

3. Wanne nach Anspruch 2, **dadurch gekennzeichnet, dass** das Tragestück (40) aus einem starren Plastikmaterial hergestellt ist.

4. Wanne nach Anspruch 3, **dadurch gekennzeichnet, dass** die Mittel zur entfernbaren Befestigung Klammern (50) umfassen, die mit dem Tragestück einstückig sind.

5. Wanne nach Anspruch 4, **dadurch gekennzeichnet, dass** die Wanne (3) des Reserverads (2) aus metallischen Drähten besteht, die aneinander geschweißt und derart gefaltet sind, dass sie eine erste Reihe von Strängen (4, 5) bilden, die sich auf einer ersten Ebene erstrecken, und auf denen das Reserverad (2) ruhen kann, eine zweite Reihe von Strängen (7, 8), im Wesentlichen senkrecht zur ersten Ebene, indem sie sich entlang von Mantellinien eines Zylinders erstrecken, und einen metallischen Draht, gekrümmt im Bogenkreis (16), der sich auf einer zweiten Ebene parallel zur ersten Ebene erstreckt, indem er mit mindestens zwei Strängen (7, 8) der zweiten Reihe von Strängen fest verbunden ist, und dadurch, dass die Klammern (50) des Tragestücks (40) mindestens einen (7) der Stränge (7, 8) der zweiten Reihe von Strängen und den metallischer Draht, gekrümmt in Bogenkreis (16), umschließen.

6. Wanne nach Anspruch 5, **dadurch gekennzeichnet, dass** das Tragestück (40) an seiner äußeren Seite eine langgezogene hohle Vertiefung (40a) umfasst, in die der metallische Draht, gebogen im Bogenkreis (16), eingegriffen ist, und deren konvexer Teil, der von der internen Seite des Tragestücks (40) hervorspringt, in eine konjugierte langgezogene hohle Vertiefung (30b) der internen Seite des thermischen Schutzschilds (30) eingebaut ist.

7. Wanne nach einem der Ansprüche 2 bis 6, **dadurch gekennzeichnet, dass** der thermische Schutzschild (30) aus Aluminium hergestellt ist und durch Crimpen auf dem Tragestück (40) mit Hilfe von Füßen (30a) fixiert ist, die mit dem thermischen Schutzschild (30) fest verbunden sind.

8. Wanne nach einem der Ansprüche 1 bis 7, **dadurch gekennzeichnet, dass** sich der thermische Schutzschild (30) unter dem hinteren Boden (1) im Wesentlichen senkrecht zu diesem Letzteren erstreckt.

9. Wanne nach einem der Ansprüche 2 bis 8, **dadurch gekennzeichnet, dass** der thermische Schutzschild (30) und das Tragestück (40) jeweils die allgemeine Form einer rechtwinkligen Platte aufweisen.

10. Kraftfahrzeug, **dadurch gekennzeichnet, dass** es mindestens eine Wanne nach einem der Ansprüche 1 bis 9 umfasst.

## Claims

1. Body of a vehicle, such as a motor vehicle, comprising a rear floor (1), a basket (3) for storing a spare tyre (2) arranged under the rear floor (1), an exhaust line comprising in particular a silencer (21) fixed under the rear floor (1), and a thermal protection shield (30) interposed between the exhaust silencer (21) and the spare tyre (2), **characterised in that** the thermal protection shield (30) is removably fixed by attachment means (50) to the basket (3) for storing the spare tyre (2).

2. Body according to claim 1, **characterised in that** the thermal protection shield (30) is integral with a support part (40) removably fixed by the attachment means (50) to the basket (3) for storing the spare tyre (2) and to the exterior of this basket with the thermal protection shield (30) arranged facing the silencer (21).

3. Body according to claim 2, **characterised in that** the support part (40) is made from a rigid plastic material.

4. Body according to claim 3, **characterised in that** the removable attachment means include clips (50) of the same material as the support part.

5. Body according to claim 4, **characterised in that** the basket (3) for storing the spare tyre (2) is comprised of metal wires welded together and folded in such a way as to form a first series of strands (4, 5) extending in a first plane and on which can rest the spare tyre (2), a second series of strands (7, 8) substantially perpendicular to the first plane by extending along generatrices of a cylinder, and a curved metal wire in an arc of circle (16) extending in a second plane parallel to the first plane by being integral with at least two strands (7, 8) of the second series of strands and **in that** the clips (50) of the support part (40) elastically surround at least one (7) of the strands (7, 8) of the second series of strands and the curved metal wire in an arc of circle (16).

6. Body according to claim 5, **characterised in that** the support part (40) comprises on its outer face a hollow slender imprint (40a) wherein is engaged the curved metal wire in arc of circle (16) and of which the convex portion protrudes from the inner face of the support part (40) is embedded in a slender hollow imprint conjugated (30b) with the inner face of the thermal protection shield (30).

7. Body according to one of claims 2 to 6, **characterised in that** the thermal protection shield (30) is made from aluminium and is fixed by crimping onto the support part (40) using lugs (30a) integral with the thermal protection shield (30).

8. Body according to one of claims 1 to 7, **characterised in that** the thermal protection shield (30) extends over the rear floor (1) substantially perpendicular to the latter.

9. Body according to one of claims 2 to 8, **characterised in that** the thermal protection shield (30) and the support part (40) each have the general shape of a rectangular plate.

10. Motor vehicle, **characterised in that** it comprised a body according to any of claims 1 to 9.
